# EUROPEAN PATENT APPLICATION

(11) **EP 4 106 109 A1**
(43) Date of publication of application: **21.12.2022**
(21) Application number: 21180123.8
(22) Date of filing: 17.06.2021
(51) Int. Cl.: H01R 4/36, H01R 11/09

(54) **FIXING ASSEMBLY FOR CLAMPING AT LEAST ONE ELECTRIC CABLE TO AN ELECTRIC DEVICE**

(71) Applicant: Tyco Electronics Raychem GmbH, 85521 Ottobrunn (DE); TE Connectivity India Private Limited, Bangalore 560048 (IN)
(72) Inventor: PATIL, Vinayak G., 560048 Bangalore (IN); PADMAWAR, Ashwin N., 560048 Bangalore (IN); POLLAKOWSKI, Sebastian, 85521 Ottobrunn (DE)
(74) Representative: Grünecker Patent- und Rechtsanwälte PartG mbB

(57) **Abstract**

Shown is a fixing assembly (100) for clamping at least one electric cable (101) to an electric device, the fixing assembly (100) comprising a fixing body (10) comprising at least one fixing section (20) with a first receptacle (21) adapted for receiving the at least one cable (101) one along a first insertion direction (E1) and with a second receptacle (22) adapted for receiving the at least one cable (101) along a second insertion direction (E2) different from the first insertion direction (E1), wherein the first receptacle (21) and the second receptacle (22) intersect, wherein the fixing section (20) comprises positive-fit members (23) associated with the first receptacle (21) and positive-fit members (23) associated with the second receptacle (22), the fixing assembly (100) further comprising a clamping piece (30) comprising positive-fit members (32) at least partially complementary to the positive-fit members (23) associated with the first receptacle (21) and the positive-fit members (23) associated with the second receptacle (22), and a threaded through-hole (31) for receiving a threaded clamping member (40), wherein in a first mounted state (S1) of the clamping piece (30) the positive-fit members (32) of the clamping piece (30) and the positive-fit members (23) associated with the first receptacle (21) are engaged and block a movement of the clamping piece (30) relative to the fixing section (20) counter to the first insertion direction (E1), and wherein in a second mounted state (S2) of the clamping piece (30) the positive-fit members (32) of the clamping piece and the positive-fit members (23) associated with the second receptacle (22) are engaged and block a movement of the clamping piece (30) relative to the fixing section (20) counter to the second insertion direction (E2).

## Description

The invention relates to a fixing assembly for clamping at least one electric cable to an electric device. The electric device can, for example, be a transformer, which can supply a desired voltage or current. In order to have a secure connection, the cable is in many cases attached by a clamping connection.

The object of the invention is to provide a solution that allows to connect the cable in different directions in a simple manner.

According to the invention, this is achieved when the fixing assembly comprises a fixing body comprising at least one fixing section with a first receptacle adapted for receiving the at least one cable along a first insertion direction and with a second receptacle adapted for receiving the at least one cable along a second insertion direction different from the first insertion direction, wherein the first receptacle and the second receptacle intersect, wherein the fixing section comprises positive-fit members associated with the first receptacle and positive-fit members associated with the second receptacle, and the fixing assembly further comprises a clamping piece comprising positive-fit members at least partially complementary to the positive-fit members associated with the first receptacle and the positive-fit members associated with the second receptacle, and a threaded through-hole for receiving a threaded clamping member, wherein in a first mounted state of the clamping piece the positive-fit members of the clamping piece and the positive-fit members associated with the first receptacle are engaged and block a movement of the clamping piece relative to the fixing section counter to the first insertion direction, and wherein in a second mounted state of the clamping piece the positive-fit members of the clamping piece and the positive-fit members associated with the second receptacle are engaged and block a movement of the clamping piece relative to the fixing section counter to the second insertion direction.

In such a solution, the fixing section can be adapted so that in the first mounted state, the clamping member is located in the first receptacle and the cable is located in the second receptacle; and in the second mounted state, the clamping member is located in the second receptacle and the cable is located in the first receptacle. The cable can thus be mounted along different directions.

The solution according to the invention can further be improved by the following further developments and advantageous embodiments, which are independent of each other and can be combined arbitrarily, as desired.

In at least one of the first mounted state or the second mounted state, an axis of the threaded through-hole can extend through the intersecting receptacles. This can facilitate a simple fixing of the cable. In particular, the axis can extend through an intersection space, where the two receptacles intersect. To allow an easy fixing, the clamping member preferably reaches into the intersection space in the mounted states.

In an advantageous embodiment, the fixing body can be a block. This can provide a mechanical stability to the fixing assembly. The first and the second receptacles can be holes in the block. Such a solution can be easy to manufacture. The holes can be blind holes and/or be closed perpendicular to the respective insertion direction to allow a reliable connection. A block can in particular be a massive piece of material. In contrast, in other embodiments the fixing body could be made from sheet metal by folding.

For an easy fixing, the positive-fit members of the fixing section can comprise support faces facing towards the associated receptacle.

Similarly, the positive-fit members of the clamping piece can comprise support faces facing away from the respective receptacle in the mounted states.

In the mounted states, the positive-fit members of the fixing body and the positive-fit members of the clamping piece can interlock.

To allow a modularity, for example by using different combinations, the clamping piece can be separate from the fixing body.

In an embodiment that allows a simple assembly and a safe fixing, the fixing section and the clamping piece can comprise complementary guiding faces for slidingly guiding the clamping piece relative to the first receptacle along a first guiding direction that is perpendicular to the insertion direction of the first receptacle.

In addition or in an alternative, the fixing section and the clamping piece can comprise complementary guiding faces for guiding the clamping piece relative to the second receptacle along a second guiding direction that is perpendicular to the insertion direction of the second receptacle.

In an advantageous embodiment that can facilitate the mounting process, the second guiding direction can be parallel to the first guiding direction.

In a further embodiment, the second guiding direction can be perpendicular to the first guiding direction. Such a solution can result in a compact design.

The second guiding direction can be parallel to the first insertion direction and/or the first guiding direction can be parallel to the second insertion direction This can reduce the space that is necessary during assembly. In particular, sideways movements perpendicular to the first and/or second insertion direction can be avoided.

For allowing a defined positioning relative to the receptacle, the fixing section and the clamping piece can comprise complementary blocking faces for blocking a movement of the clamping piece relative to the first receptacle along a first blocking direction that is perpendicular to the insertion direction of the first receptacle. Similar blocking faces can block a movement counter to the first blocking direction.

The first blocking direction can be perpendicular to the first guiding direction. This can enable a simple and safe mounting as it allows a defined positioning along the first blocking direction, while allowing a mounting movement in the first guiding direction.

In addition or in an alternative, the first blocking direction or a further blocking direction can be parallel to the first guiding direction. A corresponding blocking face can limit the movement of the clamping piece in the first guiding direction. In particular, an automatic positioning along the guiding direction can be achieved by such an embodiment.

In a corresponding advantageous embodiment, the fixing section and the clamping piece can comprise complementary blocking faces for blocking a movement of the clamping piece relative to the second receptacle along and/or counter to a second blocking direction that is perpendicular to the insertion direction of the second receptacle.

As for the first blocking direction, such a second blocking direction can be parallel or perpendicular to the second guiding direction.

According to an advantageous embodiment, the fixing body and the clamping piece can be made from different materials. For example, the fixing body can be made from a material with a good electrical conductivity, for instance a material that comprises copper (Cu) or aluminium (Al). The clamping piece can be made from a material with a high mechanical strength, for instance a material comprising steel.

In a preferred embodiment, the receptacles are threadless receptacles. Such receptacles can be easy to produce. For example, the receptacles can have smooth inner surfaces that allow an easy insertion. In a different embodiment, the receptacles can have gripping projections on an inside, for example in the form of serrations, running perpendicular to the insertion direction. Such a solution can result in a stronger mechanical fixing of the cables in the receptacles.

At least one of the first receptacle or the second receptacle can have a cylindrical cross section, the axis of the cylinder being parallel to the axis of the threaded through-hole of the clamping piece in the corresponding first or second mounted state, respectively. In such an embodiment, the fixing with the clamping member can be particularly easy. Preferably, the axis of the cylinder is coaxial with or identical to the axis of the threaded through-hole. In a particularly preferred embodiment, the axis of the cylinder is parallel to the axis of the threaded through-hole of the clamping piece in the corresponding first and second mounted state.

The first insertion direction and the second insertion direction can be at an angle of 60° to 120° to each other. In the case of cylindrical receptacles, the axes of the first and second receptacles can then be at an angle of 60° to 120° to each other. Preferably, the angle is approximately 90° to achieve a compact construction.

The positive-fit members of the clamping piece and the positive-fit members of the fixing section can comprise at least one protrusion protruding perpendicular to the insertion direction and at least one complementary recess. This can be an easy solution for achieving a positive fit.

Preferably, the protrusion and/or the recess are elongated perpendicular to the insertion direction. The elongated shape can result in an enlarged contact area for the positive fit. Further, a guiding can be facilitated.

In an advantageous embodiment, the positive-fit members of the clamping piece and the fixing section comprise at least one undercut. Such a solution provides a safe possibility to achieve a positive fit.

Further, the positive-fit members of the clamping piece and the fixing section can comprise at least one dovetail profile. Such a profile can provide a good positive-fit effect.

In a preferred embodiment, the clamping piece is formed as a slot nut or a T-nut. For example, slot nuts or T-nuts that are already available can be used in the fixing assembly. This can reduce the costs, as no extra parts have to be planned and custom-made.

In a further advantageous embodiment, the profiles and/or contours of the positive-fit members associated with the two receptacles are identical. Thus, a single clamping piece can be used for both receptacles.

The positive-fit members of the fixing section can have a constant cross-section, at least along one direction, for example along the guiding direction. This can allow a simple production and/or assembly.

To allow the fixing of several cables, the fixing body can comprise at least two fixing sections arranged next to each other along a row direction. Preferably, the at least two fixing sections are embodied identically. This can make the production and assembly as well as the mounting of the cables easy. The insertion directions, guiding directions and blocking directions, where applicable, of the two fixing sections can be identical to keep the construction simple.

Two or more fixing sections are preferably part of an integral fixing body, in particular of a block. This can simplify the manufacturing.

In an embodiment that is particularly easy to manufacture and to operate, the positive-fit members of at least two fixing sections are sections of common positive-fit members having a constant cross-section along the row direction. For example, the common positive-fit members can have a continuous translational symmetry.

When there are two or more fixing sections, the fixing body preferably has a discrete translational symmetry. In such a translation symmetry, a unit cell representing a fixing section is repeated several times along the row direction. This can facilitate the manufacturing process. For instance, an elongated element with a multitude of such unit cells could be manufactured and a desired fixing assembly could be produced in a simple manner by cutting off an appropriate length from the elongated element.

In an advantageous embodiment, the clamping piece has at least one two-fold rotational symmetry. Such a clamping piece can be easier to mount, as it can be mounted in two equivalent orientations. Preferably, the clamping piece has two or three two-fold rotational symmetries around two or three perpendicular axes. For a clamping piece with three two-fold rotational symmetries, it is no longer necessary to check the orientation before mounting to the fixing section. The assembly can thus be simplified.

The fixing assembly can further comprise a clamping member. The fixing assembly can be a set comprising a fixing body, at least one clamping piece and at least one clamping member.

In a simple configuration, the clamping member can be a bolt or a screw. In particular, pre-existing bolts or screws can be used as the clamping member.

To allow an easy fixing, the clamping member can comprise a drive section. The drive section can be adapted to be operated manually by an operator or by a machine.

The clamping member can comprise a tool interface to facilitate the interaction with a tool. The tool can, for example, be a screwdriver, a hex key, or a hex nut. The clamping member can thus comprise a slit or a hexagonal cross-section as a tool interface.

In a preferred embodiment, the clamping member is connected to the clamping piece and at least one end, preferably both ends of the thread are blocked. This measure prevents that the clamping member and the clamping piece are disengaged unintentionally. For example, the thread can be blocked by having filling material in the form of a blocking section between two neighboring ridges.

Different embodiments for attaching the fixing body to the electric device are possible. In the first embodiment, the fixing body could be welded or soldered to an electrically conducting part of the electric device.

In a further embodiment, the fixing body can comprise an attachment section for attaching the fixing body to the electric device. Such an attachment section can be adapted to allow a repeated attaching and detaching. For example, the attachment section can comprise a through-hole. The through-hole can be adapted for receiving a bolt or a screw. For instance, the through-hole can have a cylindrical cross-section with or without an inner thread.

For an easy insertion, at least one insertion direction can be perpendicular to an opening of the receptacle. The opening can be understood as the two-dimensional abstract structure or the rim of this abstract structure that terminates the three-dimensional receptacle.

At least one insertion direction can be parallel to an axis of the receptacle, in particular parallel to an axis of the cylinder in the case of a cylindrical receptacle.

In the previous sections, some relations and directions are described as being perpendicular. Such perpendicular orientations might be specific, particularly advantageous embodiments. In many applications, it will also suffice if these relations or directions are transverse, i.e. different from 90° but also different from 0°. For example, an angle could be at least 45° or at least 60° and still achieve the desired effect. In particular, the orientation of the guiding direction relative to the insertion direction, the orientation of the blocking direction relative to the insertion direction, and the orientation of the blocking direction relative to the guiding direction can be different from 90°.

In order to allow the mounting of a further cable along a further direction, for example a third insertion direction, the fixing section can comprise at least one further receptacle. Such a further receptacle can be associated with corresponding further positive-fit members.

A positive-fit can be understood as a blocking of a movement along a defined direction.

The invention will now be described in greater detail and in an exemplary manner using advantageous embodiments and with reference to the drawings. The described embodiments are only possible configurations in which, however, the individual features as described above can be provided independently of one another or can be omitted.

In the figures:
- Fig. 1: shows a schematic perspective view of an embodiment of a fixing assembly;
- Fig. 2: shows a schematic perspective view of a further embodiment of a fixing assembly;
- Fig. 3: shows a schematic front view of the embodiment of Fig. 2;
- Fig. 4: shows a schematic, sectional side view of the embodiment of Fig. 2;
- Fig. 5: shows a schematic sectional side view of embodiments of a clamping piece and a clamping member;
- Fig. 6: shows a schematic side view of the clamping member of fig. 5;
- Fig. 7: shows a schematic perspective view of a further embodiment of a fixing assembly;
- Fig. 8: shows a schematic perspective view of a further embodiment of a fixing assembly;
- Fig. 9: shows a schematic perspective view of further embodiments of a clamping piece and a clamping member;
- Fig. 10: shows a schematic perspective view of the clamping member of Fig. 9;
- Fig. 11: shows a further schematic perspective view of the embodiment of Fig. 9 from a different perspective;
- Fig. 12: shows a schematic perspective view of a further embodiment of a clamping piece;
- Fig. 13: shows a schematic perspective view of a further embodiment of a clamping piece;
- Fig. 14: shows a schematic perspective view of details of a further embodiment of a fixing assembly;
- Fig. 15: shows a schematic perspective view of a further embodiment of a clamping member;
- Fig. 16: shows a schematic perspective view of two embodiments of the fixing assembly of Fig. 7 in different mounted states.

The figures show different embodiments of fixing assemblies 100 for fixing at least one cable 101 to an electric device, for example a transformer. The electric device can supply a voltage or current that is used by different further devices connected to the electric device. The cable 101 can comprise a core 103 that is surrounded by an insulation layer 102. For contacting, the insulation layer 102 can be removed from the core 103 in the parts that are located in the fixing assembly 100.

Each fixing assembly 100 comprises a fixing body 10 with at least one fixing section 20 that is adapted for clamping and connecting the at least one cable 101 along different directions. Each fixing section 20 comprises a first receptacle 21 that allows the insertion of the cable 101 along a first insertion direction E1 and a second receptacle 22 that allows the insertion of the cable 101 along a second insertion direction E2. In the depicted embodiments, the first insertion direction E1 and the second insertion direction E2 are perpendicular to each other. However, in other embodiments, these directions could be at an angle that is different from 90° but different from 0° or 180°, for example at 45° or 60°. The two insertion directions E1, E2 are then transverse to each other.

The two receptacles 21, 22 intersect and have a common intersection space 29 through which both extend.

The fixing body 20 is a massive block into which the receptacles 21, 22 are formed as holes 95. In particular, the receptacles 21, 22 are formed as blind holes that terminate in the block. Each of the receptacles 21, 22 has a basically cylindrical shape with a corresponding cylinder axis C1, C2 that extends parallel to the corresponding insertion direction E1, E2.

Each fixing assembly 100 further comprises at least one clamping piece 30 that can selectively be mounted in front of the first receptacle 21 or the second receptacle 22. The clamping piece 30 is then located next to the corresponding opening 51, 52 of the receptacle 21, 22. The opening can be understood as the two-dimensional structure in the surface of the fixing body 10, while the term receptacle 21, 22 relates to the three-dimensional structure inside the block.

The fixing section 20 comprises positive-fit members 23 that are adapted to engage corresponding positive-fit members 32 on the clamping piece 30. In a first mounted state S1, in which the clamping piece 30 is located in front of the first receptacle 21, the positive-fit members 23, 32 block a movement of the clamping piece 30 relative to the fixing section 20 counter to the first insertion direction E1. In this first mounted state S1, the cable 101 can be inserted into the second receptacle 22 and be fixed in the fixing section 20 by a clamping member 40 extending through the clamping piece 30 and into the intersection space 29.

In a second mounted state S2, in which the clamping piece 30 is located in front of the second receptacle 22, the positive-fit members 23, 32 block a movement of the clamping piece 30 relative to the fixing section 20 counter to the second insertion direction E2. In this second mounted state S2, the cable 101 can be inserted into the first receptacle 21 and be fixed in the fixing section 20 by the clamping member 40 extending through the clamping piece 30 and into the intersection space 29.

The clamping piece 30 comprises a threaded through-hole 31 having an inner thread 34 that engages an outer thread 43 of the clamping member 40.

The clamping member 40 can be embodied as a screw 41 or comprise a screw 41. Further, the clamping member 40 can comprise a drive section 47 at which it can be operated by an operator or a machine. The clamping 40 can in particular comprise a tool interface 42, for example in the form of a hole with a hexagonal cross-section to allow the interaction with a hex key.

The positive-fit members 23 of the fixing section 20 comprise support faces 25 that face towards the associated receptacle 21, 22. The positive-fit members 32 of the clamping piece 30 comprise support faces 35 facing away from the receptacle 21, 22 in the respective mounted state S1, S2. In the depicted embodiments, the positive-fit members 23, 32 not only block a movement counter to the insertion direction E1, E2, but also along the insertion direction E1, E2.

The fixing section 20 and the clamping piece 30 comprise complementary guiding faces 27, 37. These serve for guiding the clamping piece 30 relative to the first receptacle 21 and the second receptacle 22 along a first guiding direction G1 and a second guiding direction G2. The first guiding direction G1 and the second guiding direction G2 are perpendicular to the respective insertion directions E1, E2. In other embodiments, these guiding directions G1, G2 could be transverse to the insertion directions E1, E2, i.e. at an angle between 90° and 0°.

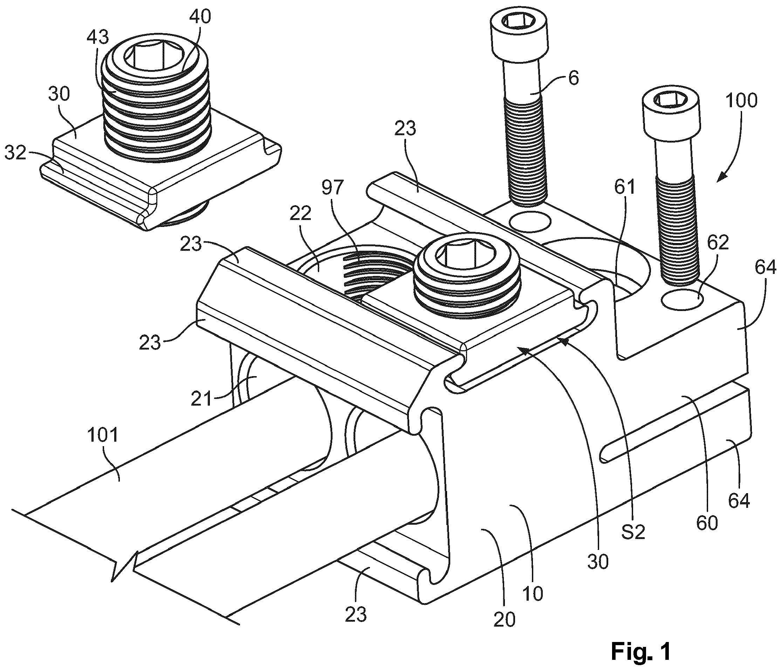

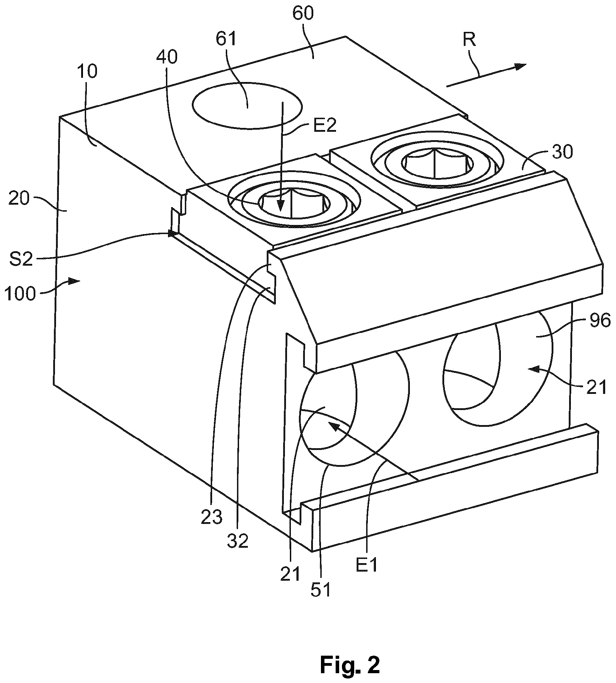

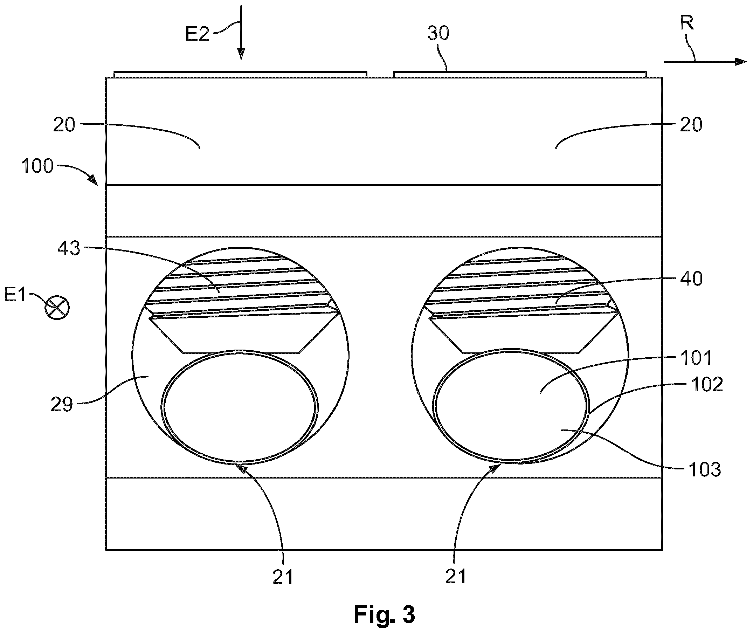

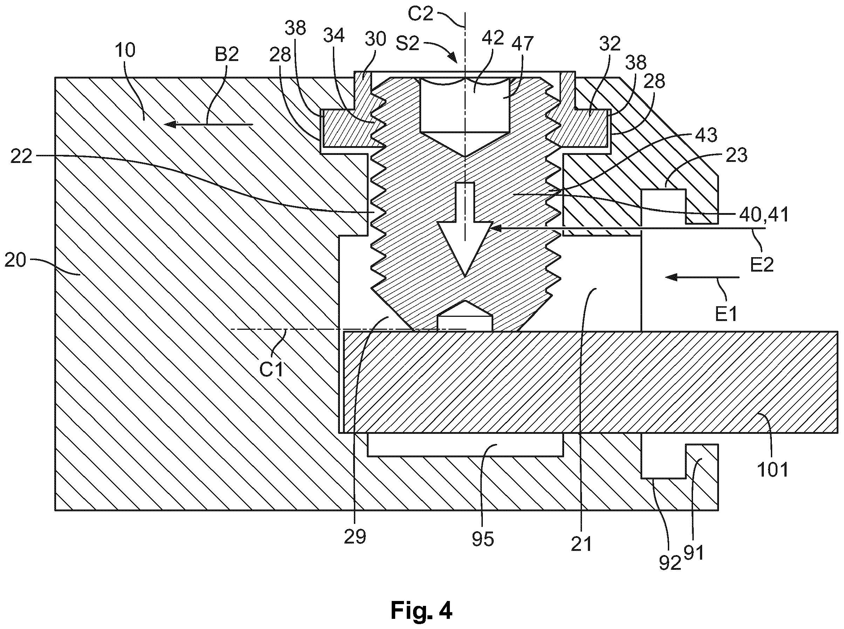

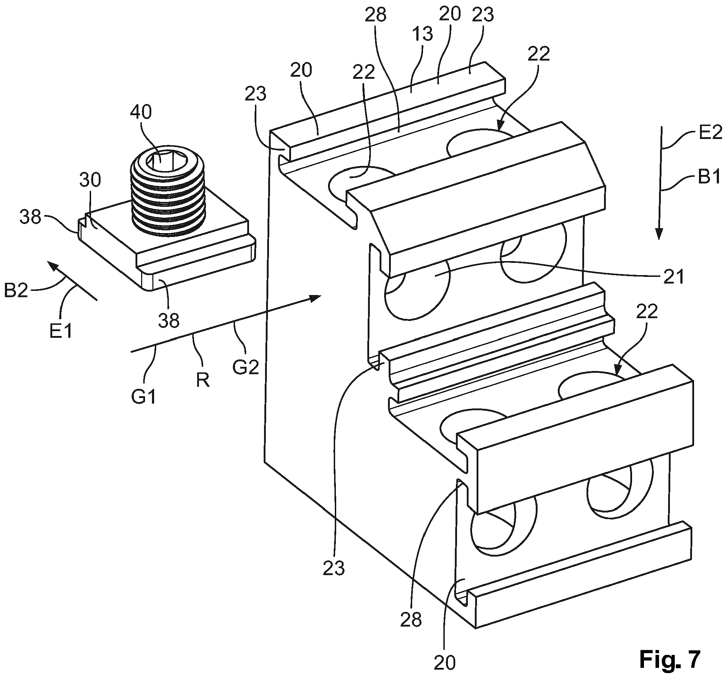

In the embodiments shown in Figs. 1, 2, 3, 4, 7 and 16, the first guiding direction G1 is parallel to the second guiding direction G2, allowing a simple mounting by inserting the clamping pieces 30 into the fixing sections 20 from the sides. In these embodiments, in the first mounted state S1 a movement of the clamping member 30 along and counter to a first blocking direction B1 that is perpendicular to the first insertion direction E1 and perpendicular to the first guiding direction G1 is blocked by blocking faces 28 on the fixing section 20 that abut against blocking faces 38 on the clamping piece 30. Similarly, in the second mounted state S2, a movement of the clamping member 30 along and counter to a second blocking direction B2 that is perpendicular to the second insertion direction E2 and perpendicular to the second guiding direction G2 is blocked by blocking faces 28 on the fixing section 20 that abut against blocking faces 38 on the clamping piece 30. As the first insertion direction E1 and the second insertion direction E2 are perpendicular to each other, the first and the second blocking direction B1, B2 are also perpendicular to each other in these embodiments.

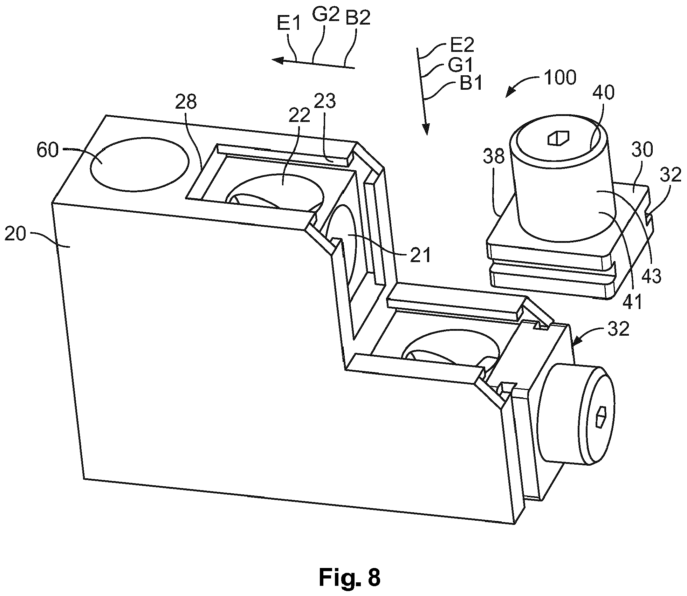

In the embodiment shown in Fig. 8, the first guiding direction G1 is perpendicular to the second guiding direction G2. Such an embodiment can, for example, allow a mounting from a front side only, for example if access from the sides is not possible. This embodiment further comprises blocking faces 28 that are perpendicular the guiding directions G1, G2. The blocking faces 28 on the fixing section 20 abut blocking faces 38 on the clamping member 30 and block a further movement of the clamping member 30 along the guiding directions G1, G2 when the clamping member 30 is located in front of the receptacles 21, 22. This allows an automatic positioning of the clamping member 30 relative to the receptacle 21, 22. Consequently, the first blocking direction B1 is parallel to the first guiding direction G1 and the second insertion direction E2 and the second blocking direction B2 is parallel to the second guiding direction G2 and the first insertion direction E1.

It should be noted that in Fig. 8 the clamping member 40 is shown schematically. In particular, the outer thread 43 is not shown in detail.

The fact that the fixing body 10 and the clamping piece 30 are separate parts allows the use of different materials adapted for the specific function. The fixing body 10 can, for example, be made from a material that has a good electrical conductivity, such as copper or aluminium. The clamping piece 30 can be made from a material that has good mechanical properties, in particular a high strength, for example steel. The clamping member 40 can also be made from the same material as the clamping piece 30.

The receptacles 21, 22 are threadless. In some embodiments, an inner surface 96 of the receptacles 21, 22 is smooth, enabling a simple insertion of the cable 101. In other embodiments, gripping projections 97 are present that improve the gripping of the cable 101. The gripping projections 97 are elongated and run in a direction that is perpendicular to the corresponding insertion direction E1, E2.

For an improved performance, some positive-fit members 23, 32 comprise at least one protrusion 91, protruding perpendicular to the respective insertion direction E1, E2. Such a protrusion 91 can engage a recess 92 on corresponding positive-fit members 32, 23. The recess 92 can be located between or be formed by two protrusions 91. The recess 92 can be a channel-like element that extends with a constant cross-section along one direction. Similarly, the protrusion 91 can be elongated and extend along a direction with a constant cross-section. Preferably, the positive-fit members 23, 32 comprise undercuts and/or a dovetail profile.

The clamping piece 30 can be formed as a slot nut or a T-nut. In particular, existing slot nuts or T-nuts can be used as clamping pieces 30 to keep costs low.

To allow an easy mounting, the clamping pieces 30 can have a twofold rotational symmetry around the axis T of the through-hole 31. The clamping piece 30 of Fig. 8 is particularly advantageous as it has two two-fold symmetries around two perpendicular axes. Such a clamping piece 30 can be mounted in four different, but equivalent orientations.

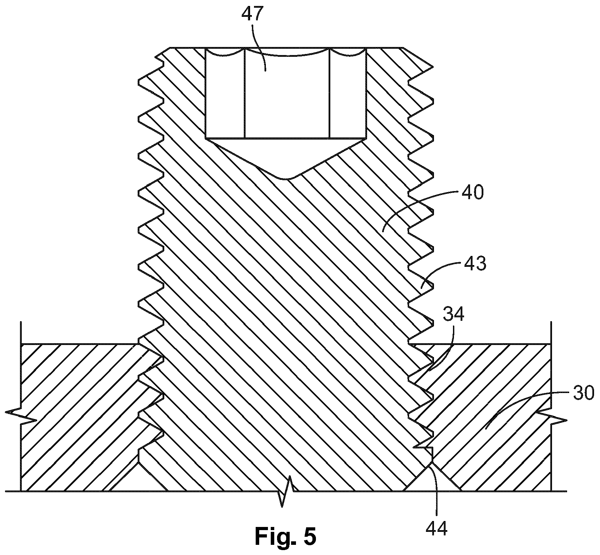

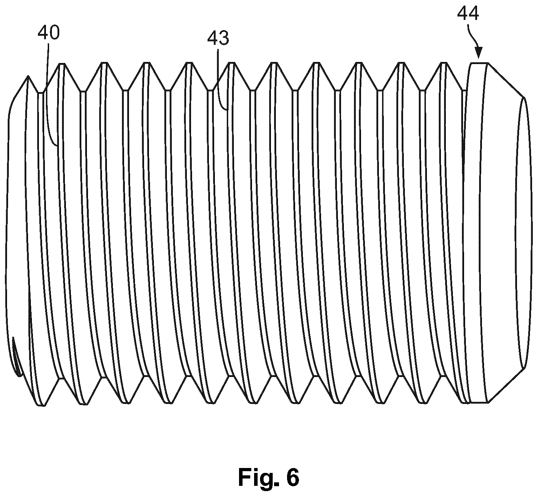

As can be seen for example in Figs. 5 and 6, the outer thread 43 of the clamping member 40 can be blocked at one end. For example, a blocking section 44 can block the thread 43. In such an embodiment, the clamping member 40 cannot be screwed out of the clamping piece 30 away from the receptacle 21, 22. The risk of an unintentional dismounting can thus be reduced.

In the case of cylindrical receptacles 21, 22, the cylinder axes C1, C2 are preferably parallel or identical to the axis T of the through-hole 31 of the clamping piece 30 in the first or second mounted state S1, S2. This can result in a balanced distribution of forces.

In some of the embodiments, the fixing body 10 comprises at least two identically embodied fixing sections 20 that are arranged next to each other along a row direction R. Such a fixing body 10 thus has along its extension a discrete translational symmetry with the fixing sections 20 being units cells that are repeated along the row direction R. Further, the positive-fit members 23 of the fixing sections 20 are part of common positive-fit members 13 of the fixing body 10. Thus, the cross-section of the positive-fit members 23 is constant along the row direction R. The common positive-fit members 13 thus have a cross-section with a continuous translational symmetry along the row direction R. The fixing bodies 10 can be produced by cutting off a piece with the desired number of fixing sections 20 from an element with a large number of fixing sections 20.

In some embodiments, two fixing sections 20 are arranged in a stacked manner behind each other, offset along the first insertion direction E1 and the second insertion direction E2. This can in particular result in a compact design.

The fixing body 10 can be attached to the electric device, for example by a permanent connection. For example, the fixing body 10 can be welded or soldered to the electric device.

In other embodiments, the fixing body 10 can comprise an attachment section 60 for repeatedly attaching and detaching the fixing body 10 from the electric device. For example, the attachment section 60 can comprise through-holes 61 for receiving a screw or a bolt. In the embodiment shown in Fig. 1, a stud or bolt of the electric device can be inserted into the through-hole 61 and be squeezed in an appropriate position by fastening screws 63. By the fastening, wings 64 are moved towards each other, resulting in a reduced cross-section in the through-hole 61.

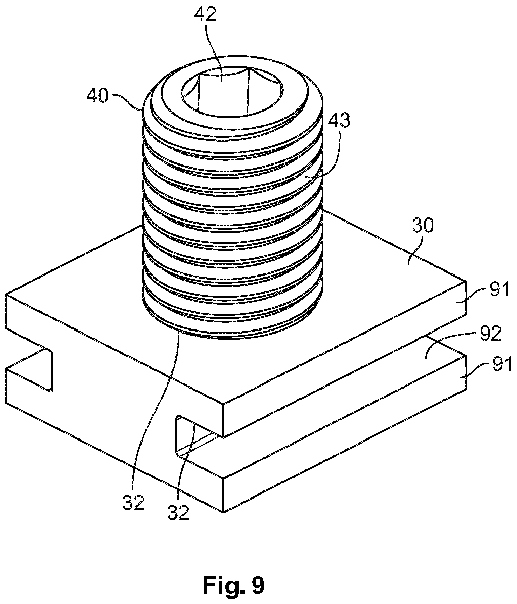

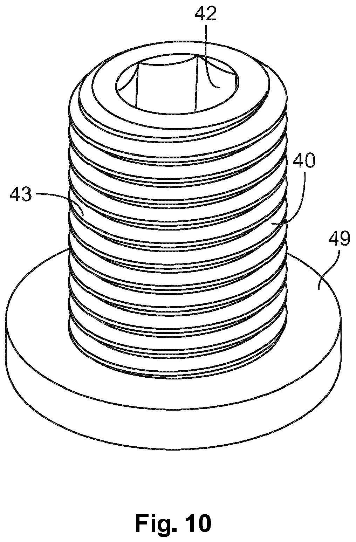

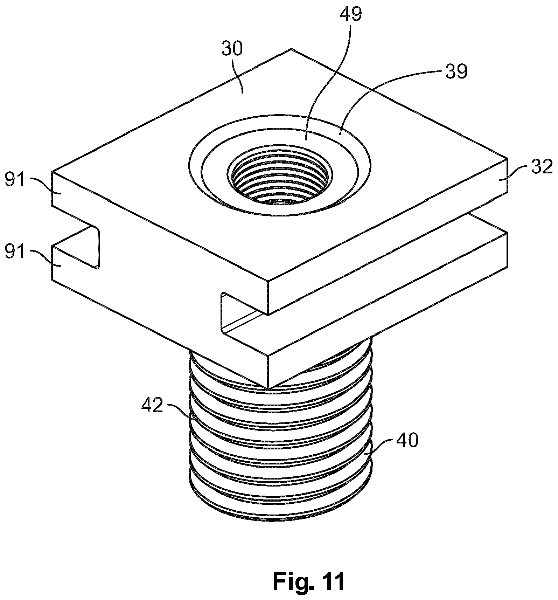

In Figs. 9 and 11, a combination of a clamping piece 30 and a clamping member 40 is shown. The clamping member 40 is depicted in Fig. 10. The clamping piece 30 comprises positive-fit members 32 on two opposing sides. Each of the positive-fit members 32 has two protrusions 91 between which a recess 92 is located. An outer thread 43 of the clamping member 40 engages a corresponding inner thread 31 (not visible) of the clamping piece 30. The clamping member 40 can be operated with a tool engaging a tool interface 42. The clamping member 40 comprises a disk-shaped contact section 49 attached to an end of a screw 41. In an end state, this disk-shaped contact section 49 can be received in a recess 39 of the clamping piece 30, resulting in a flush lower surface. This allows an easy sliding of the combination of the clamping piece 30 and the clamping member 40 during an insertion into the fixing section 20.

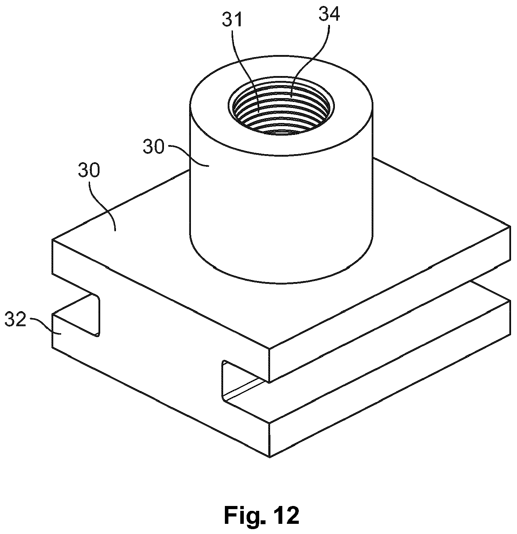

In Fig. 12, a more complex clamping piece 30 is depicted, in which a shaft element protrudes from a flat part to which it is connected, for example by welding. A clamping member 40 can be inserted into the threaded through-hole 31 and brought in engagement with an inner thread 34.

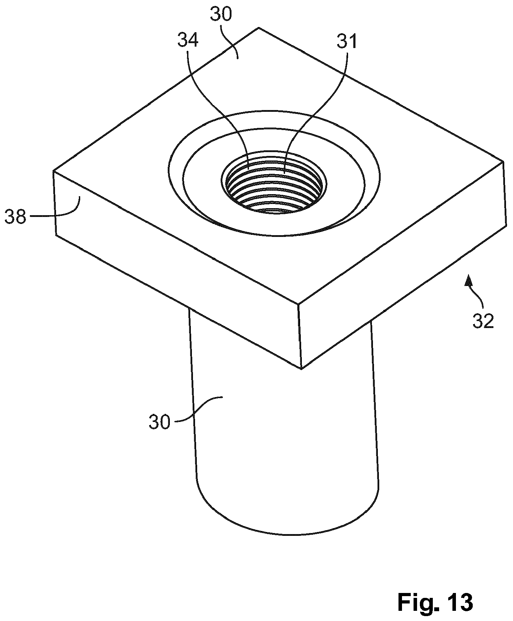

An embodiment similar to the one of Fig. 12 is shown in Fig. 13. It can be seen that surfaces of the flat, box-shaped lower part can serve as the positive-fit members 32.

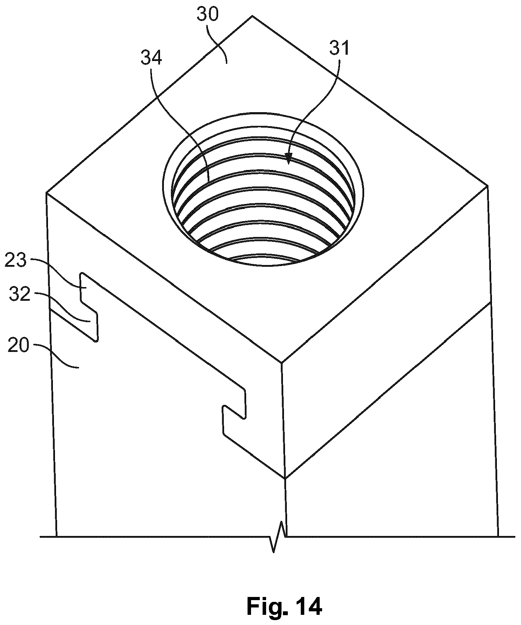

In Fig. 14, a further embodiment of positive-fit members 23, 32 is shown. In this case, the positive-fit members 32 of the clamping piece 30 extend over and behind the positive-fit members 23 of the fixing section 20, which basically have a T-shaped cross-section.

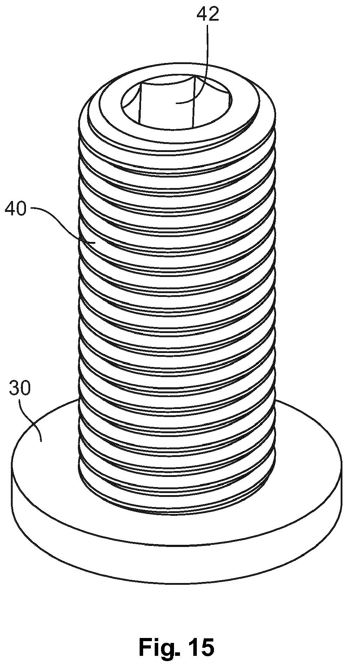

In Fig. 15, a further combination of a clamping member 14 and a clamping piece 30 is shown. Unlike the other embodiments, this clamping piece 30 has a rounded disk-shaped configuration. The rotation of the clamping piece 30 relative to the fixing section 20 can, for example, be avoided by friction or by a structured surface.

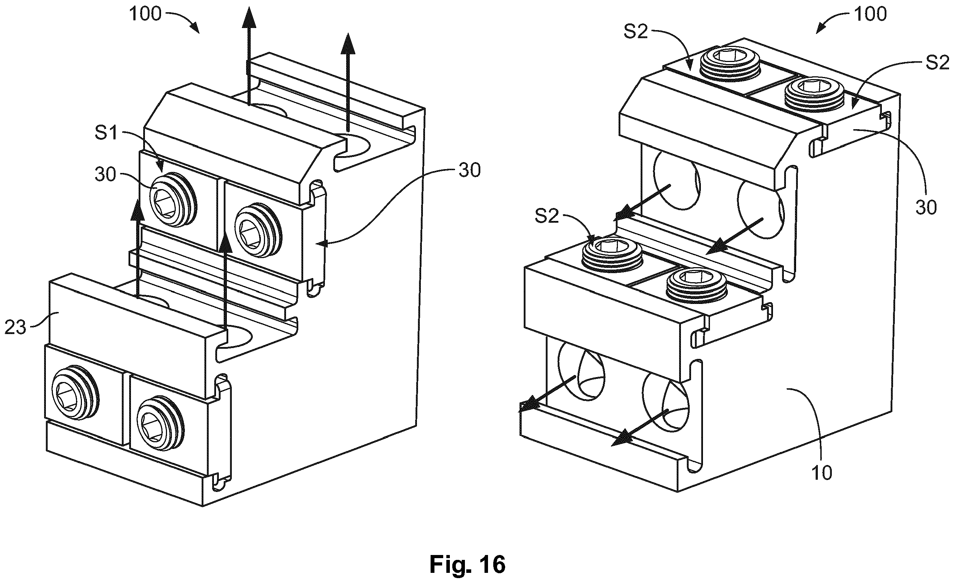

In Fig. 16, two fixing assemblies 100 are shown, one with the clamping members 30 in the first mounted state S1 and the other one with the clamping members 30 in the second mounted state S2.

### Reference Numerals

- 10: fixing body
- 13: common positive-fit member
- 20: fixing section
- 21: first receptacle
- 22: second receptacle
- 23: positive-fit member
- 25: support face
- 27: guiding face
- 28: blocking face
- 29: intersection space
- 30: clamping piece
- 31: through-hole
- 32: positive-fit member
- 34: inner thread
- 35: support face
- 37: guiding face
- 38: blocking face
- 39: recess
- 40: clamping member
- 41: screw
- 42: tool interface
- 43: outer thread
- 44: blocking section
- 47: drive section
- 49: contact section
- 51: opening
- 52: opening
- 60: attachment section
- 61: through-hole
- 62: through-hole
- 63: screw
- 64: wing
- 91: protrusion
- 92: recess
- 95: hole
- 96: inner surface
- 97: gripping projections
- 100: fixing assembly
- 101: cable
- 102: insulation layer
- 103: core

- B1: first blocking direction
- B2: second blocking direction
- C1: cylinder axis
- C2: cylinder axis
- E1: first insertion direction
- E2: second insertion direction
- G1: first guiding direction
- G2: second guiding direction
- R: row direction
- S1: first mounted state
- S2: second mounted state
- T: axis through-hole

## Claims

1. Fixing assembly (100) for clamping at least one electric cable (101) to an electric device, the fixing assembly (100) comprising
a fixing body (10) comprising at least one fixing section (20) with a first receptacle (21) adapted for receiving the at least one cable (101) along a first insertion direction (E1) and with a second receptacle (22) adapted for receiving the at least one cable (101) along a second insertion direction (E2) different from the first insertion direction (E1), wherein the first receptacle (21) and the second receptacle (22) intersect, wherein the fixing section (20) comprises positive-fit members (23) associated with the first receptacle (21) and positive-fit members (23) associated with the second receptacle (22),
the fixing assembly (100) further comprising a clamping piece (30) comprising positive-fit members (32) at least partially complementary to the positive-fit members (23) associated with the first receptacle (21) and the positive-fit members (23) associated with the second receptacle (22), and a threaded through-hole (31) for receiving a threaded clamping member 40,
wherein in a first mounted state (S1) of the clamping piece (30) the positive-fit members (32) of the clamping piece (30) and the positive-fit members (23) associated with the first receptacle (21) are engaged and block a movement of the clamping piece (30) relative to the fixing section (20) counter to the first insertion direction (E1), and
wherein in a second mounted state (S2) of the clamping piece (30) the positive-fit members (32) of the clamping piece (30) and the positive-fit members (23) associated with the second receptacle (22) are engaged and block a movement of the clamping piece (30) relative to the fixing section (20) counter to the second insertion direction (E2).

2. Fixing assembly (100) according to claim 1, wherein in the first mounted state (S1) and/or the second mounted state (S2) an axis (T) of the threaded through-hole (31) extends through the intersecting receptacles (21, 22).

3. Fixing assembly (100) according to claim 1 or 2, wherein the fixing assembly (100) is a block.

4. Fixing assembly (100) according to one of claims 1 to 3, wherein the fixing section (20) and the clamping piece (30) comprise complementary guiding faces (27, 37) for slidingly guiding the clamping piece (30) relative to the first receptacle (21) along a first guiding direction (G1) that is perpendicular to the insertion direction (E1) of the first receptacle (21).

5. Fixing assembly (100) according to one of claims 1 to 4, wherein the fixing section (20) and the clamping piece (30) comprise complementary blocking faces (28, 38) for blocking a movement of the clamping piece (30) relative to the first receptacle (21) along a first blocking direction (B1) that is perpendicular to the insertion direction (E1) of the first receptacle (21).

6. Fixing assembly (100) according to one of claims 4 and 5, wherein the first blocking direction (B1) is perpendicular to the first guiding direction (G1).

7. Fixing assembly (100) according to one of claims 1 to 6, wherein the fixing body (10) and the clamping piece (30) are made from different materials.

8. Fixing assembly (100) according to one of claims 1 to 7, wherein the receptacles (21, 23) are threadless receptacles.

9. Fixing assembly (100) according to one of claims 1 to 8, wherein the positive-fit members (23, 32) of the clamping piece (30) and the fixing section (20) comprise at least one protrusion (91) protruding perpendicular to the insertion direction (E1, E2) and at least one complementary recess (92).

10. Fixing assembly (100) according to one of claims 1 to 9, wherein at least one of the first receptacle (21) or the second receptacle (22) has a cylindrical cross section and the axis (C1, C2) of the cylinder is parallel to the axis (T) of the threaded through-hole (31) of the clamping piece (30) in the corresponding first or second mounted state (S1, S2), respectively.

11. Fixing assembly (100) according to one of claims 1 to 10, wherein the positive-fit members (23) of the fixing section (20) have a constant cross section.

12. Fixing assembly (100) according to one of claims 1 to 11, wherein the fixing body (10) comprises at least two identically embodied fixing sections (20) arranged next to each other along a row direction (R).

13. Fixing assembly (100) according to claim 12, wherein the positive-fit members (23) of at least two fixing sections (20) are sections of common positive-fit members (13) having a constant cross section along the row direction (R).

14. Fixing assembly (100) according to one of claims 1 to 13, wherein the clamping piece (30) has at least one two-fold rotational symmetry.

15. Fixing assembly (100) according to one of claims 1 to 14, wherein the fixing body (10) comprises an attachment section (60) for attaching the fixing body (10) to an electric device.
